# EUROPÄISCHE PATENTSCHRIFT

(11) **EP 3 322 598 B1**
(45) Veröffentlichungstag und Bekanntmachung des Hinweises auf die Patenterteilung: **08.05.2019**
(21) Anmeldenummer: 16703542.7
(22) Anmeldetag: 09.02.2016
(51) Int. Cl.: B60C 13/00, B60C 3/04, B60C 13/04

(54) **FAHRZEUGLUFTREIFEN**
PNEUMATIC VEHICLE TYRE
PNEUMATIQUE DE VÉHICULE

(30) Priorität: 16.07.2015 DE 102015213403
(43) Veröffentlichungstag der Anmeldung: 23.05.2018
(73) Patentinhaber: Continental Reifen Deutschland GmbH, 30165 Hannover (DE)
(72) Erfinder: HABICHT, Stefan, 30449 Hannover (DE); HOLSTE, Werner, 30539 Hannover (DE)
(74) Vertreter: Widjaja, Wira
(86) Internationale Anmeldenummer: PCT/EP2016/052677
(87) Internationale Veröffentlichungsnummer: WO 2017/008921

(56) Entgegenhaltungen:
- EP-A1- 2 818 332
- DE-A1-102011 001 657
- JP-B1- 3 032 754
- US-A1- 2013 075 004

## Beschreibung

Die Erfindung betrifft einen Fahrzeugluftreifen mit einer nominellen Reifenquerschnittshöhe von maximal 110 mm, mit einem Laufstreifen, einem Gürtelverband, Wulstbereichen mit Wulstkernen und Hornprofilen, einer Radialkarkasse, welche die Wulstkerne in den Wulstbereichen Karkasshochschläge bildend von axial innen nach axial außen umläuft, und mit Seitenwandbereichen, welche jeweils ein Wingprofil und ein Seitenwandprofil aufweisen, wobei das Wingprofil der einzige im radial äußeren Bereich des Seitenwandbereiches in Kontakt mit der Radialkarkasse verlaufende Gummibauteil ist und einen radial inneren, in Richtung Wulstbereich verjüngend auslaufenden Endabschnitt, der das Seitenwandprofil außenseitig überlappt, sowie einen radial äußeren, am Laufstreifenrandbereich auslaufenden Endabschnitt aufweist, und wobei das Seitenwandprofil im Querschnitt ein im Wesentlichen streifenförmiger, zwischen Wingprofil und Hornprofil angeordneter Gummibauteil ist.

Ein derartiger Fahrzeugluftreifen ist aus der DE 10 2011 001 657 A1 bekannt. Die Wingprofile sind bei diesem Fahrzeugluftreifen die einzigen in den radial äußeren Bereichen der Seitenwände verlaufenden Gummibauteile, sodass die Gummidicke in diesen Bereichen geringer gehalten werden kann als bei Ausführungen, bei welchen die Seitenwandprofile und Wingprofile in diesem Bereich überlappen. Bei diesem bekannten Reifen ist ferner vorgesehen, dass die Hochschläge der Radialkarkasse bis unter den Gürtelverband reichend rückgeführt sind. Dieser bekannte Reifen weist jedoch in den Seitenwandbereichen eine derart erhöhte radiale Steifigkeit auf, dass er insbesondere hinsichtlich seiner Handlingeigenschaften und des in das Fahrzeuginnere übertragenen Fahrgeräusches verbesserungswürdig ist.

Ausgehend von diesem bekannten Reifen liegt der Erfindung daher die Aufgabe zugrunde, diese Nachteile zu beheben und darüber hinaus den Fahrzeugluftreifen in den Seitenwandbereichen noch schlanker ausführen zu können.

Gelöst wird die gestellte Aufgabe erfindungsgemäß dadurch, dass die Karkasshochschläge in einer von einer Basislinie ermittelten radialen Höhe enden, die 15 mm bis 65 mm beträgt, und dass die Wingprofile jeweils zumindest in einem Bereich zwischen einer von der Basislinie ermittelten radialen Höhe von 29 % der nominellen Seitenwandhöhe und einer von der Basislinie ermittelten radialen Höhe von mindestens 80 % der Reifenquerschnittshöhe die einzigen außerhalb der Radialkarkasse verlaufenden Gummibauteile sind, wobei die Basislinie in axialer Richtung verläuft und die Felge dort schneidet, wo sich das äußere Ende des Felgenradius befindet.

Bei einem erfindungsgemäß ausgeführten Reifen ist der Kopfbereich des Reifens von den Wulstbereichen des Reifens weitgehend mechanisch entkoppelt, vor allem als Folge der in den Seitenwandbereichen erzielbaren geringeren radialen Steifigkeit. Für die Entkoppelung verantwortlich sind die in relativ geringer Höhe endenden Karkasshochschläge sowie der relativ große Bereich, innerhalb welchem lediglich die Wingprofile als Gummibauteile verlaufen. Die bei der aus der DE 10 2011 001 657 A1 bekannten Ausführung vorgesehene Rückführung der Karkasshochschläge unterhalb des Gürtelverbandes - man spricht hier von einer "C-Lage" - hat in den sensiblen Schulterbereichen einen erhöhten Schulterdruck des Reifens in der Bodenaufstandsfläche zur Folge. Dieser erhöhte Schulterdruck kann auch einen vermehrten Schulterabrieb zur Folge haben. Bei erfindungsgemäß ausgeführten Reifen können ferner die Wingprofile sehr dünn ausgeführt werden, sodass die radiale Seitenwandsteifigkeit weiter verringert wird. Fahrzeugluftreifen mit einer geringen Seitenwandsteifigkeit weisen bessere Handlingeigenschaften auf, da sie mehr einfedern können. Dadurch vergrößert sich insbesondere die dynamische Bodenaufstandsfläche des Reifens, womit eine bessere Kraftübertragung und daher verbesserte Handlingeigenschaften einhergehen. Die bereits erwähnte mechanische Entkoppelung bewirkt ferner eine Verringerung des Reifengeräusches im Fahrzeuginneren. Durch die Möglichkeit, die Gummidicke in den Seitenwandbereichen noch weiter zu verringern, kann zusätzlich eine Gewichtseinsparung erzielt werden, die eine deutliche Verbesserung des Rollwiderstandes des Reifens zur Folge hat.

Besonders bevorzugt ist eine Ausführungsform der Erfindung, bei der die Wingprofile ab einer Höhe von 25 % der nominellen Seitenwandhöhe die einzigen außerhalb der Radialkarkasse verlaufenden Gummibauteile sind. Vorzugsweise sind die Wingprofile dabei in Richtung Laufstreifen bis in eine Höhe von bis zu 90 % der Reifenquerschnittshöhe die einzigen außerhalb der Radialkarkasse verlaufenden Gummibauteile. Diese Ausführung ist für eine besonders wirksame Verringerung der radialen Seitenwandsteifigkeit vorteilhaft.

Gemäß einer weiteren vorteilhaften Ausführungsform beträgt die senkrecht zum Verlauf der Radialkarkasse vorliegende Dicke der Wingprofile in jenen Seitenwandbereichen, in welchen sie die einzigen außerhalb der Radialkarkasse verlaufenden Gummibauteile sind, 1,0 mm bis 3,5 mm, insbesondere bis zu 2,5 mm. Besonders vorteilhaft ist eine Dicke der Wingprofile in diesen Bereichen von 1,5 mm bis 1,8 mm. Dabei sollte die Dicke der Wingprofile in diesen Seitenwandbereichen im Wesentlichen konstant sein.

Vorteilhafterweise können ferner in jedem Seitenwandbereich das Seitenwandprofil, der radial äußere Endabschnitt des Hornprofils und das Wingprofil eine Felgenschutzrippe bilden, deren größte Dicke senkrecht zum Verlauf der Radialkarkasse 4,0 mm bis 14,0 mm beträgt.

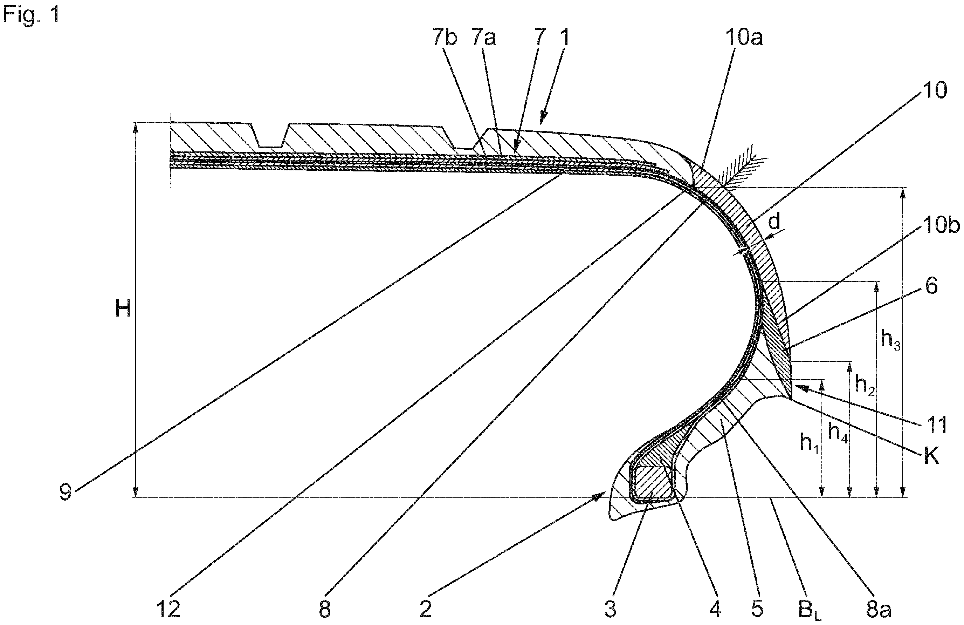

Weitere Merkmale, Vorteile und Einzelheiten der Erfindung werden nun anhand der Zeichnung, die ein Ausführungsbeispiel darstellt, näher beschrieben. Die einzige Zeichnungsfigur, Fig. 1, zeigt einen Querschnitt einer Hälfte eines Fahrzeugluftreifens.

Die in der Beschreibung und in den Patentansprüchen angegebenen Größen- und Dimensionsangaben beziehen sich auf einen auf einer Standardfelge montierten Reifen unter Standardinnendruck, jedoch im unbelastenen Zustand, gemäß den E.T.R.T.O.-Standards in der derzeit geltenden Fassung. Die radialen Abstände bzw. Höhen sind von einer Basislinie B_{L} aus ermittelt, welche in axialer Richtung verläuft und die Felge dort schneidet, wo sich das äußere Ende des Felgenradius befindet. Unter der Nennbreite ist die gemäß den E.T.R.T.O.-Standards in den Reifendimensionsangaben enthaltene Nennbreite in Millimeter zu verstehen. So ist beispielsweise in der Reifendimension "235/35R19" die Zahl 235 die Nennbreite in Millimeter, die Zahl 35 steht für das Nennquerschnittsverhältnis. Gemäß diesem Beispiel entsprechen daher 35 % der Nennbreite des Reifens der nominellen Seitenwandhöhe, diese beträgt daher in diesem Beispiel 82,25 mm. Erfindungsgemäß ausgeführte Fahrzeugluftreifen sind PKW-Reifen radialer Bauart mit nominellen Seitenwandhöhen von bis zu 110 mm.

Der in Fig. 1 in einer Schnittansicht gezeigte Fahrzeugluftreifen weist einen Laufstreifen 1, Wulstbereiche 2 mit Wulstkernen 3, einem ein- oder mehrteiligen Apex (Kernprofil) 4 und einem Hornprofil 5 auf, ferner Seitenwandprofile 6, einen Gürtelverband 7, eine Radialkarkasse 8 und eine luftdichte Innenschicht 9. Über die Seitenwandbereiche des Fahrzeugluftreifens verläuft, wie noch im Detail beschrieben wird, jeweils ein Wingprofil 10.

Der Apex 4, das Hornprofil 5, das Seitenwandprofil 6 und das Wingprofil 10 sind Gummiprofile, welche aus den für diese Bauteile üblichen Kautschukmischungen hergestellt sein können.

Der Laufstreifen 1, welcher nicht Gegenstand der Erfindung ist, kann in bekannter Weise ausgeführt bzw. aufgebaut sein, beispielsweise einschichtig oder zweischichtig mit einer Laufstreifenbase und einer Laufstreifencap. Der Laufstreifen 1 ist ferner in bekannter und nicht gezeigter Weise mit einer Laufstreifenprofilierung versehen und wird gemeinsam mit den beiden Wingprofilen 10, die mit den Laufstreifenrandbereichen überlappen, durch Koextrusion hergestellt. Üblicherweise bestehen die Wingprofile 10 aus der gleichen Kautschukmischung wie die Seitenwandprofile 6. Die Kautschukmischung der Wingprofile 10 kann sich jedoch von jener der Seitenwandprofile 6 auch unterscheiden.

Die Radialkarkasse 8 weist in bekannter Weise zumindest eine Lage aus gummierten, insbesondere textilen Korden auf, welche zumindest im Wesentlichen in radialer Richtung verlaufen. Die jeweils von axial innen nach axial außen um die Wulstkerne 3 verlaufende Karkasse 8 reicht mit ihren umgeschlagenen Abschnitten, den Hochschlägen 8a, bis in eine Höhe h₁, die 15 mm bis 65 mm beträgt.

Der Gürtelverband 7 weist mindestens zwei Gürtellagen 7a, 7b mit zueinander gekreuzt, aber in jeder Lage parallel verlaufenden Festigkeitsträgern, insbesondere Stahlkorden, auf. Die Gürtellagen 7a, 7b können mit einer nicht gezeigten, ein- oder mehrlagigen Bandage bedeckt sein, welche in bekannter Weise aus in Gummi eingebetteten, im Wesentlichen in Umfangsrichtung verlaufenden Bandagenkorden, beispielsweise Nylonkorden, besteht.

Der axial außerhalb des Karkasshochschlages 8a bzw. der Karkasslage 8 verlaufende Abschnitt des Hornprofils 5 bildet gemeinsam mit dem Seitenwandprofil 6 und dem Wingprofil 10 eine Felgenschutzrippe 11 mit einer entlang des Seitenwandbereiches ringförmig umlaufenden Kante K an der dicksten Stelle der Schutzrippe 11. Der Seitenwandbereich radial außerhalb der Kante K weist eine konkav gerundete Außenkontur auf und radial innerhalb der Kante K einen konvex gekrümmten Abschnitt entlang des radial äußeren Bereiches des Hornprofiles 5. Die größte Gummidicke im Bereich der Felgenschutzrippe 11, senkrecht zum Verlauf der Karkasse 8 ermittelt, beträgt zwischen 4 mm und 14 mm.

Das Wingprofil 10 verläuft vom Laufstreifen 1 über den Schulterbereich des Reifens entlang des Seitenwandbereiches und weist zwei Endabschnitte 10a, 10b auf, welche die angrenzenden Bauteile außenseitig überlappen. Der Endabschnitt 10a überlappt den Laufstreifenrandbereich, der Endabschnitt 10b das Seitenwandprofil 6. Zumindest zwischen einer Höhe h₂ von 29 % der nominellen Seitenwandhöhe des betreffenden Fahrzeugluftreifens und der an der Karkasse 8 befindlichen Grenze 12 zwischen dem Wingprofil 10 und dem Laufstreifen 1 ist das Wingprofil 10 der einzige außenseitig der Karkasse 8 verlaufende Gummibauteil. Vorzugsweise sind die Wingprofile 10 bereits ab einer Höhe h₂ von 25 % der nominellen Seitenwandhöhe die einzigen Gummibauteile. Die Grenze 12 befindet sich in einer Höhe h₃ von 80 % bis 90 % der Querschnittshöhe H. Radial außerhalb dieser Grenze 12 läuft der Endabschnitt 10a unter im Wesentlichen kontinuierlicher Verringerung seiner Dicke entlang des Laufstreifens 1 aus, ragt jedoch nicht in den Bereich der Bodenaufstandsfläche des Laufstreifens 1 hinein. Beginnend in der Höhe h₂ erstreckt sich der Endabschnitt 10b des Wingprofiles 10 in Richtung Wulstbereich 2, wobei der Endabschnitt 10b außenseitig des Seitenwandprofiles 6 mit abnehmender Dicke verläuft und entlang des Seitenwandprofiles 6 ausläuft. Das radial innere Ende des Endabschnittes 10b des Wingprofiles 10 befindet sich in einer Höhe h₄ von 20 % bis 25 % der nominellen Seitenwandhöhe und radial außerhalb der Kante K. Das Seitenwandprofil 6 ist im Querschnitt im Wesentlichen streifenförmig gestaltet, befindet sich zwischen dem Hornprofil 5 und dem Endabschnitt 10b des Wingprofiles 10 und weist ebenfalls zwei schmälere, sich verjüngende Endabschnitte auf, einen entlang des Endabschnittes 10b des Wingprofiles 10 auslaufenden und einen zwischen dem Hornprofil 5 und entlang der Schutzrippe 11 bis zur Kante K auslaufenden Endabschnitt.

In jenem Seitenwandbereich, in welchem das Wingprofil 10 der einzige außenseitig der Karkasslage 8 verlaufende Gummibauteil ist, weist es an jeder Stelle, senkrecht zum Verlauf der Radialkarkasse 8, eine Dicke d auf, die 1,0 mm bis 3,5 mm, vorzugsweise bis 2,5 mm, insbesondere mindestens 1,5 mm und insbesondere maximal 1,8 mm, beträgt. Die Dicke d des Wingprofiles 10 ist in diesem Bereich weitgehend konstant, kann jedoch auch geringfügig, insbesondere um bis zu 0,2 mm, variieren.

Erfindungsgemäß ausgeführte Reifen weisen eine geringere radiale Steifigkeit in den Seitenwandbereichen auf, womit eine Anzahl vorteilhafter Effekte verbunden ist, die eingangs erwähnt sind.

### Bezugsziffernliste

- 1.......................: Laufstreifen
- 2.......................: Wulstbereich
- 3.......................: Wulstkern
- 4.......................: Apex
- 5.......................: Hornprofil
- 6.......................: Seitenwandprofil
- 6a, 6b...............: Endabschnitt
- 7.......................: Gürtelverband
- 7a, 7b...............: Gürtellage
- 8.......................: Radialkarkasse
- 8a.....................: Karkasshochschlag
- 9.......................: Innenschicht
- 10.....................: Wingprofil
- 10a, 10b...........: Endabschnitt
- 11.....................: Schutzrippe
- 12.....................: Grenze
- B_{L}.....................: Basislinie
- d.......................: Dicke
- H......................: Querschnittshöhe
- h₁, h₂, h₃, h₄......: Höhe
- K......................: Kante

## Patentansprüche

1. Fahrzeugluftreifen mit einer nominellen Reifenquerschnittshöhe von maximal 110 mm, mit einem Laufstreifen (1), einem Gürtelverband (7), Wulstbereichen (2) mit Wulstkernen (3) und Homprofilen (5), einer Radialkarkasse (8), welche die Wulstkerne (3) in den Wulstbereichen (2) Karkasshochschläge (8a) bildend von axial innen nach axial außen umläuft, und mit Seitenwandbereichen, welche jeweils ein Wingprofil (10) und ein Seitenwandprofil (6) aufweisen, wobei das Wingprofil (10) der einzige im radial äußeren Bereich des Seitenwandbereiches in Kontakt mit der Radialkarkasse (8) verlaufende Gummibauteil ist und einen radial inneren, in Richtung Wulstbereich (2) verjüngend auslaufenden Endabschnitt (10b), der das Seitenwandprofil (6) außenseitig überlappt, sowie einen radial äußeren, am Laufstreifenrandbereich auslaufenden Endabschnitt (10a) aufweist, und wobei das Seitenwandprofil (6) im Querschnitt ein im Wesentlichen streifenförmiger, zwischen Wingprofil (10) und Homprofil (5) angeordneter Gummibauteil ist,
**dadurch gekennzeichnet,**
**dass** die Karkasshochschläge (8a) in einer von einer Basislinie (B_{L}) ermittelten radialen Höhe (h₁) enden, die 15 mm bis 65 mm beträgt, und dass die Wingprofile (10) jeweils zumindest in einem Bereich zwischen einer von der Basislinie (B_{L}) ermittelten radialen Höhe (h₂) von 29 % der nominellen Seitenwandhöhe und einer von der Basislinie (B_{L}) ermittelten radialen Höhe (h₃) von mindestens 80 % der Reifenquerschnittshöhe (H) die einzigen außerhalb der Radialkarkasse (8) verlaufenden Gummibauteile sind, wobei die Basislinie (B_{L}) in axialer Richtung verläuft und die Felge dort schneidet, wo sich das äußere Ende des Felgenradius befindet.

2. Fahrzeugluftreifen nach Anspruch 1, **dadurch gekennzeichnet, dass** die Wingprofile (10) ab einer Höhe (h₂) von 25% der nominellen Seitenwandhöhe die einzigen außerhalb der Radialkarkasse (8) verlaufenden Gummibauteile sind.

3. Fahrzeugluftreifen nach Anspruch 1 oder 2, **dadurch gekennzeichnet, dass** die Wingprofile (10) Richtung Laufstreifen (1) bis in eine Höhe (h₃) von bis zu 90 % der Reifenquerschnittshöhe (H) die einzigen außerhalb der Radialkarkasse (8) verlaufenden Gummibauteile sind.

4. Fahrzeugluftreifen nach einem der Ansprüche 1 bis 3, **dadurch gekennzeichnet, dass** die senkrecht zum Verlauf der Radialkarkasse (8) vorliegende Dicke (d) der Wingprofile (10) in jenen Seitenwandbereichen, in welchen sie die einzigen außerhalb der Radialkarkasse (8) verlaufenden Gummibauteile sind, 1,0 mm bis 3,5 mm, insbesondere bis 2,5 mm, beträgt.

5. Fahrzeugluftreifen nach einem der Ansprüche 1 bis 4, **dadurch gekennzeichnet, dass** die senkrecht zum Verlauf der Radialkarkasse (8) vorliegende Dicke (d) der Wingprofile (10) in jenen Seitenwandbereichen, in welchen sie die einzigen außerhalb der Radialkarkasse (8) verlaufenden Gummibauteile sind, mindestens 1,5 mm beträgt.

6. Fahrzeugluftreifen nach einem der Ansprüche 1 bis 5, **dadurch gekennzeichnet, dass** die senkrecht zum Verlauf der Radialkarkasse (8) vorliegende Dicke (d) der Wingprofile (10) in jenen Seitenwandbereichen, in welchen sie die einzigen außerhalb der Radialkarkasse (8) verlaufenden Gummibauteile sind, höchstens 1,8 mm beträgt.

7. Fahrzeugluftreifen nach einem der Ansprüche 1 bis 6, **dadurch gekennzeichnet, dass** die senkrecht zum Verlauf der Radialkarkasse (8) vorliegende Dicke (d) der Wingprofile (10) in jenen Seitenwandbereichen, in welchen sie die einzigen außerhalb der Radialkarkasse (8) verlaufenden Gummibauteile sind, im Wesentlichen konstant ist.

8. Fahrzeugluftreifen nach einem der Ansprüche 1 bis 7, **dadurch gekennzeichnet, dass** in jedem Seitenwandbereich das Seitenwandprofil (6), der radial äußere Endabschnitt des Hornprofils (5) und das Wingprofil (10) eine Felgenschutzrippe (11) bilden, deren größte Dicke senkrecht zum Verlauf der Radialkarkasse (8) 4 mm bis 14 mm beträgt.

## Claims

1. Pneumatic vehicle tire having a nominal tire cross-sectional height of at most 110 mm, having a tread (1), a belt assembly (7), bead regions (2) with bead cores (3) and horn profiles (5), a radial carcass (8), which runs around the bead cores (3) in the bead regions (2) axially on the inside to axially on the outside, forming carcass turn-ups (8a), and having side wall regions, which each have a wing profile (10) and a side wall profile (6), wherein the wing profile (10) is the only rubber component extending in contact with the radial carcass (8) in the radially outer region of the side wall region and has a radially inner end section (10a) which runs out in a tapered manner in the direction of the bead region (2) and which overlaps the side wall profile (6) on the outside, and has a radially outer end section (10b), which runs out at the tread edge region, and wherein, in cross section, the side wall profile (6) is a substantially strip-shaped rubber component arranged between the wing profile (10) and the horn profile (5),
**characterized**
**in that** the carcass turn-ups (8a) end at a radial height (h₁), determined from a base line (B_{L}), of 15 mm to 65 mm, and in that, at least in a region between a radial height (h₂), determined from the base line (B_{L}), of 29% of the nominal side wall height and a radial height (h₃), determined from the base line (B_{L}), of at least 80% of the tire cross-sectional height (H), the wing profiles (10) are the only rubber components that extend outside the radial carcass (8), wherein the base line (B_{L}) extends in the axial direction and intersects the rim where the outer end of the rim radius is situated.

2. Pneumatic vehicle tire according to Claim 1, **characterized in that**, from a height (h₂) of 25% of the nominal side wall height, the wing profiles (10) are the only rubber components that extend outside the radial carcass (8).

3. Pneumatic vehicle tire according to Claim 1 or 2, **characterized in that**, in the direction of the tread (1) up to a height (h₃) of up to 90% of the tire cross-sectional height (H), the wing profiles (10) are the only rubber components that extend outside the radial carcass (8).

4. Pneumatic vehicle tire according to one of Claims 1 to 3, **characterized in that** the thickness (d) of the wing profiles (10) perpendicularly to the extent of the radial carcass (8) in those side wall regions in which they are the only rubber components extending outside the radial carcass (8) is 1.0 mm to 3.5 mm, in particular up to 2.5 mm.

5. Pneumatic vehicle tire according to one of Claims 1 to 4, **characterized in that** the thickness (d) of the wing profiles (10) perpendicularly to the extent of the radial carcass (8) in those side wall regions in which they are the only rubber components extending outside the radial carcass (8) is at least 1.5 mm.

6. Pneumatic vehicle tire according to one of Claims 1 to 5, **characterized in that** the thickness (d) of the wing profiles (10) perpendicularly to the extent of the radial carcass (8) in those side wall regions in which they are the only rubber components extending outside the radial carcass (8) is at most 1.8 mm.

7. Pneumatic vehicle tire according to one of Claims 1 to 6, **characterized in that** the thickness (d) of the wing profiles (10) perpendicularly to the extent of the radial carcass (8) in those side wall regions in which they are the only rubber components extending outside the radial carcass (8) is substantially constant.

8. Pneumatic vehicle tire according to one of Claims 1 to 7, **characterized in that**, in each side wall region, the side wall profile (6), the radially outer end section of the horn profile (5) and the wing profile (10) form a rim protection rib (11), the maximum thickness of which perpendicularly to the extent of the radial carcass (8) is 4 mm to 14 mm.

## Revendications

1. Pneumatique de véhicule avec une hauteur de section transversale de pneumatique nominale de 110 mm maximum, avec une bande de roulement (1), avec une ceinture (7), avec des zones de bourrelet (2) avec des noyaux de bourrelet (3) et des profils de rebord (5), avec une carcasse radiale (8) entourant de l'intérieur dans le plan axial vers l'extérieur dans le plan axial les noyaux de bourrelet (3) formant les cols de carcasse (8a) dans les zones de bourrelet (2) et avec des zones de paroi latérale présentant respectivement un profil d'aile (10) et un profil de paroi latérale (6), le profil d'aile (10) étant le seul composant en caoutchouc s'étendant dans la zone extérieure dans le plan radial de la zone de paroi latérale en contact avec la carcasse radiale (8) et présentant une section d'extrémité (10b) intérieure dans le plan radial se terminant par un rétrécissement en direction de la zone de bourrelet (2) chevauchant sur le côté extérieur le profil de paroi latérale (6), ainsi qu'une section d'extrémité (10a) extérieure dans le plan radial prenant fin au niveau de la zone de bordure de la bande de roulement et le profil de paroi latérale (6) étant, en section transversale, un composant en caoutchouc pour l'essentiel en forme de bande disposé entre le profil d'aile (10) et le profil de rebord (5) ; **caractérisé en ce que** :
les cols de carcasse (8a) se terminent à une hauteur radiale (h₁) déterminée par rapport à une ligne de base (B_{L}) de 15 mm à 65 mm et que les profils d'aile (10) sont des composants en caoutchouc uniques s'étendant à l'extérieur de la carcasse radiale (8), respectivement au moins dans une zone prévue entre une hauteur radiale (h₂) déterminée par rapport à la ligne de base (B_{L}), de 29 % de la hauteur de paroi latérale nominale et une hauteur radiale (h₃) déterminée par rapport à la ligne de base (B_{L}) d'au moins 80 % de la hauteur de section transversale de pneumatique (H) ;
la ligne de base (BL) s'étendant dans la direction axiale et croisant la jante à l'endroit de l'extrémité extérieure du rayon de jante.

2. Pneumatique de véhicule selon la revendication 1, **caractérisé en ce que** les profils d'aile (10) sont des composants en caoutchouc uniques s'étendant à l'extérieur de la carcasse radiale (8) à partir d'une hauteur (h₂) de 25 % de la hauteur de paroi latérale nominale.

3. Pneumatique de véhicule selon la revendication 1 ou 2, **caractérisé en ce que** les profils d'aile (10) sont des composants en caoutchouc uniques s'étendant à l'extérieur de la carcasse radiale (8) en direction de la bande de roulement (1) jusqu'à une hauteur (h₃) pouvant atteindre 90 % de la hauteur de section transversale de pneumatique (H).

4. Pneumatique de véhicule selon l'une quelconque des revendications 1 à 3, **caractérisé en ce que** l'épaisseur (d) des profils d'aile (10) présente perpendiculairement à la courbe de la carcasse radiale (8) est de 1,0 mm à 3,5 mm, notamment à 2,5 mm, dans les zones de paroi latérale dans lesquelles ils sont les uniques composants en caoutchouc s'étendant à l'extérieur de la carcasse radiale (8).

5. Pneumatique de véhicule selon l'une quelconque des revendications 1 à 4, **caractérisé en ce que** l'épaisseur (d) des profils d'aile (10) présente perpendiculairement à la courbe de la carcasse radiale (8) est d'au moins 1,5 mm dans les zones de paroi latérale dans lesquelles ils sont les uniques composants en caoutchouc s'étendant à l'extérieur de la carcasse radiale (8).

6. Pneumatique de véhicule selon l'une quelconque des revendications 1 à 5, **caractérisé en ce que** l'épaisseur (d) des profils d'aile (10) présente perpendiculairement à la courbe de la carcasse radiale (8) est de tout au plus 1,8 mm dans les zones de paroi latérale dans lesquelles ils sont les uniques composants en caoutchouc s'étendant à l'extérieur de la carcasse radiale (8).

7. Pneumatique de véhicule selon l'une quelconque des revendications 1 à 6, **caractérisé en ce que** l'épaisseur (d) des profils d'aile (10) présente perpendiculairement à la courbe de la carcasse radiale (8) est pour l'essentiel constante dans les zones de paroi latérale dans lesquelles ils sont les uniques composants en caoutchouc s'étendant à l'extérieur de la carcasse radiale (8).

8. Pneumatique de véhicule selon l'une quelconque des revendications 1 à 7, **caractérisé en ce que** dans chaque zone de paroi latérale, le profil de paroi latérale (6), la section d'extrémité située à l'extérieur dans le plan radial du profil de rebord (5) et le profil d'aile (10) forment un renfort de protection de jante (11) dont la plus grande épaisseur est de 4 mm à 14 mm, perpendiculairement à la courbe de la carcasse radiale (8) .
